# FASCICULE DE BREVET EUROPEEN

(11) **EP 0 782 088 B1**
(45) Date de publication et mention de la délivrance du brevet: **26.03.2003**
(21) Numéro de dépôt: 96402598.5
(22) Date de dépôt: 29.11.1996
(51) Int. Cl.: G06K 7/06, H01R 12/22

(54) **Connecteur actif pour carte à puce**
Aktiver Steckverbinder für Chipkarte
Active connector for chip card

(30) Priorité: 28.12.1995 FR 9515666
(43) Date de publication de la demande: 02.07.1997
(73) Titulaire: FCI, 75009 Paris (FR)
(72) Inventeur: Robert, Bernard, 25300 Pontarlier (FR)
(74) Mandataire: Keib, Gérard

(56) Documents cités:
- EP-A- 0 515 153
- WO-A-95/33245
- FR-A- 2 587 549
- US-A- 4 993 956
- US-A- 5 378 160

## Description

L'invention concerne un connecteur actif pour carte à microcircuit (ou carte à puce) c'est-à-dire un connecteur pour carte à puce comportant un composant de contrôle d'opérations de lecture / écriture de la carte associé à un cadre de lecture comportant un support et des terminaisons de contact avec la carte à puce.

Les cadres de lecture pour carte à puce de type connu comportent des terminaisons de contact communément appelées contacts balais destinées à relier les plages de contact de la carte, par exemple carte à mémoire utilisée dans les applications bancaires, téléphones publics, téléphones cellulaires ou autres, à une électronique de traitement des informations contenues dans la carte.

Dans les systèmes connus, le concepteur d'applications utilisant des cartes à puce doit prévoir d'une part les circuits électroniques de son application mais aussi les dispositifs de gestion directe de la lecture / écriture de la carte d'où accroissement des contraintes en terme d'encombrement de son appareil et un coût supplémentaire en temps de développement, test et composants utilisés. En outre, cette conception comporte le risque d'accroître les longueurs de connexion, ce qui est défavorable en terme de haute fréquence et de susceptibilité aux perturbations électromagnétiques et en terme de rayonnement propre.

La complexité croissante des protocoles de gestion de lecture / écriture de la carte et la nécessité d'accroître la sécurité des opérations effectuées avec la carte conduit par ailleurs les constructeurs de circuits intégrés à réaliser des composants déchargeant le concepteur d'applications électroniques utilisant des cartes à puce de la gestion des séquences ou protocoles de lecture / écriture des informations sur la carte.

Dans la demande de brevet internationale WO 96/24111, qui fait partie de l'état de la technique dans le sens de l'article 54(3) CBE, la demanderesse décrit la réalisation d'un connecteur pour carte à puce incorporant un composant de contrôle dont des plages d'entrées-sorties sont interposées entre certaines des terminaisons de raccordement au circuit imprimé de l'application électronique et certains des contacts balais par l'intermédiaire d'un réseau de connexions.

La présente invention a pour but de proposer une nouvelle conception de connecteur actif d'intégration poussée présentant l'avantage de minimiser les longueurs des liaisons électriques défavorables pour des signaux rapides.

Dans ce but, l'invention propose d'intégrer directement un composant de contrôle sous un cadre de lecture.. et prévoit pour cela de réaliser un connecteur pour carte à puce principalement constitué d'un composant de contrôle d'opérations de lecture / écriture de la carte à puce et d'un cadre de lecture pour carte à puce, le cadre de lecture comportant un support en matériau isolant recevant des terminaisons de contact d'un premier type faisant saillie d'un plan supérieur du support en matériau isolant pour être en contact électrique avec les plages de contact de la carte, pour lequel le support isolant comporte un plan inférieur, duquel font saillie, d'une part, des terminaisons de contact d'un deuxième type pour être en contact électrique avec des plages de contact du composant de contrôle d'opérations de lecture / écriture de la carte et, d'autre part, des jambes de liaison sur un circuit imprimé dont la hauteur h définit un espace entre le support isolant et le circuit imprimé tel que le composant de contrôle soit logé entre le plan inférieur du support isolant et le circuit imprimé.

Selon d'autres caractéristiques et modes de réalisation de l'invention :
- une ou plusieurs des terminaisons de contact du premier type sont prolongées par des branches les reliant à des terminaisons de contact du deuxième type correspondantes pour réaliser une liaison directe entre des plages de contact de la carte à puce et des plages de contact du composant de contrôle ;
- les jambes de liaisons sont constituées des pattes de connexion électrique d'une ou plusieurs des terminaisons de contact du premier type avec le circuit imprimé ;
- une ou plusieurs pattes de connexion peuvent posséder une branche latérale de liaison avec des terminaisons de contact du deuxième type ;
- la hauteur des jambes de liaison est telle que les branches latérales soient mises en pression sur les plages de contact respectives du composant de contrôle assurant ainsi la liaison électrique et le maintien mécanique du composant de contrôle entre le connecteur et le circuit imprimé ;
- une ou plusieurs des terminaisons de contact du deuxième type peuvent comporter une portion ressort d'accrochage et de maintien du composant de contrôle contre la face inférieure du support isolant, la portion ressort assurant la mise en pression des deuxièmes terminaisons de contact avec les plages de contact du composant de contrôle ;
- le support isolant comporte des butées d'insertion du composant de contrôle sous le support isolant ;
- les terminaisons de contact du premier type et les terminaisons de contact du deuxième type sont constituées par les parties terminales, respectivement supérieure et inférieure, de forme générale courbe, de lames de contact électrique débouchant respectivement en partie supérieure et en partie inférieure du support isolant, la face externe de la partie terminale supérieure étant en contact élastique avec une plage correspondante de la carte à puce, la face interne de la partie terminale inférieure étant en contact élastique avec une plage correspondante du composant de contrôle et la face externe de la partie terminale inférieure étant en contact avec une piste correspondante du circuit imprimé.

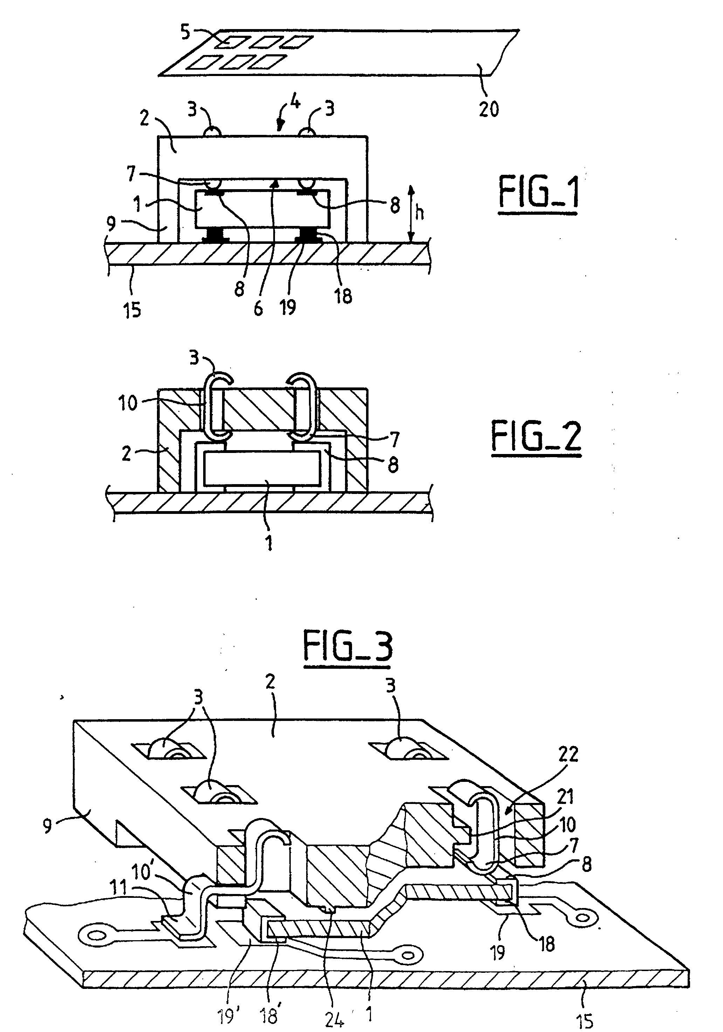

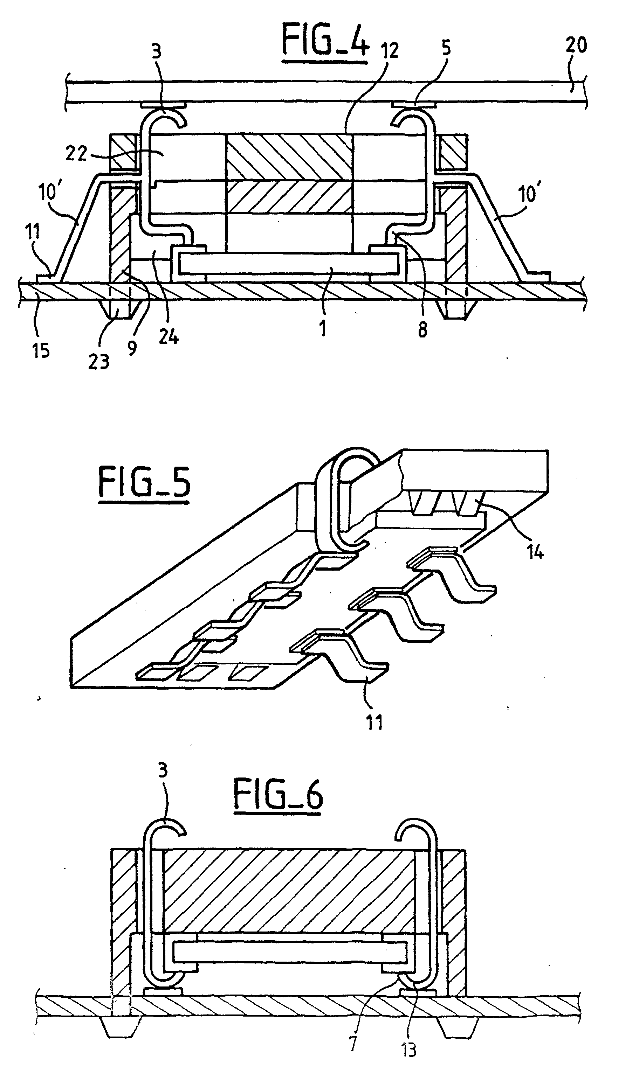

D'autres caractéristiques et avantages de l'invention apparaîtront à la lecture de la description qui va suivre en référence avec les dessins annexés qui représentent ;
- en figure 1 une vue latérale d'un connecteur actif selon le principe de l'invention ;
- en figures 2, 4, 5 des vues latérales en coupe d'un connecteur actif selon plusieurs modes de réalisation de l'invention ;
- en figure 3 une vue du dessus en perspective partiellement éclatée d'une variante de réalisation de l'invention ;
- en figure 6 une vue du dessous partiellement éclatée d'un mode de réalisation particulier de l'invention.

Le principe du connecteur selon l'invention est schématisé en figure 1. Un cadre de lecture est constitué du support 2 et des terminaisons de contact du premier type ou contacts balais 3 situés sur la face supérieure 4 du support, s'inscrivant dans un plan dit plan supérieur du cadre, et destinés à réaliser une connexion électrique avec des plages de contact 5 d'une carte à puce 20. Le support comporte une face inférieure 6, s'inscrivant dans un plan dit plan inférieur du cadre, surélevée par rapport à un circuit imprimé 15 et délimitant ainsi un logement pour un composant de contrôle 1, le support 2 étant solidarisé au circuit imprimé 15 par des jambes de liaison 9. De la face inférieure du support sortent des contacts 7 réalisant une connexion directe entre des terminaisons de contact balai 3 et des plages de contact 8 du composant 1.

En figure 3 un premier exemple de réalisation d'un connecteur actif est décrit en vue éclatée. Le support isolant 2 comporte des alvéoles 22 d'où débouchent les contacts balais 3. Les contacts balais 3 sont prolongés par des branches 10, 10' permettant soit une liaison directe par une patte de connexion 11 à une piste correspondante du circuit imprimé, ce dans le cas de signaux électriques non contrôlés, soit une connexion au composant de contrôle 1 par l'intermédiaire d'un contact 7 reposant sur une plage de contact 8 pour les signaux devant transiter par ce composant. Selon le mode de réalisation de la figure 3, les plages de contact du composant de contrôle 1 sont de forme générale en U et réalisent ainsi une plage de contact supérieure et une plage de contact inférieure 18 de connexion au circuit imprimé. Cette forme en U donne l'avantage de simplifier la réalisation du composant de contrôle par rapport à une réalisation pour laquelle le composant de contrôle est muni de plages supérieures et inférieures comme décrit en figure 1. Cette configuration permet une éventuelle lecture des signaux de contrôle au niveau du circuit imprimé. Le composant de contrôle 1 peut comporter des plages de contact 18' non reliées aux contacts balais 3 et reliées uniquement au circuit imprimé par des pistes 19' de manière à véhiculer les signaux spécifiques du composant de contrôle tels que son alimentation ou les signaux à destination de l'application. Sur la figure 3 on peut voir que les branches 10 sont éventuellement montées flottantes verticalement dans les alvéoles 22 et que ces dernières peuvent comporter un élément de butée verticale 21. Dans ce cas, l'élément de contact constitué du contact balai 3, de la branche 10 et de l'élément de contact 8 forme un contact ressort dont les efforts sont répartis entre la plage 5 de la carte et la plage 8 du composant. Pour ce qui concerne les contacts balais reliés directement au circuit imprimé par des pattes des connexions 11, les branches 10' peuvent sortir latéralement avant de couper le plan inférieur défini par la face inférieure du cadre afin d'être suffisamment espacées latéralement des plages de connexion du composant de contrôle. Les branches 10' peuvent de plus comporter une partie surmoulée dans le cadre pour définir leur maintien. Le support peut comporter, outre les jambes complémentaires 9 d'appui sur le circuit imprimé éventuellement prolongées par un dispositif de rétention de type harpon (voir repère 23 sur l'exemple décrit en figure 4), des éléments d'appui 24 et de maintien du composant 1.

En figure 4 un deuxième exemple de réalisation est décrit pour lequel les contacts balais 3, dépassant du plan supérieur du cadre, font partie d'un élément de contact à trois branches comportant dans sa partie inférieure au plan inférieur du cadre, d'une part, une branche de liaison 10' de connexion au circuit imprimé par une patte 11 et, d'autre part, une branche latérale 12 terminée par la terminaison de contact 8. Dans ce mode de réalisation, les branches latérales 12 forment ressort d'appui du composant 1 sur le circuit imprimé, les éléments de contact pouvant soit comporter une zone de maintien surmoulée dans le support isolant 2, soit être emprisonnés dans le support isolant qui, dans ce cas, sera réalisé en deux parties. Avantageusement, les jambes de liaison 9 sont pourvues d'un élément de rétention 23 sur le circuit imprimé et le support isolant comporte des parois 24 de centrage du support par rapport au composant. Le composant peut être soudé sur le circuit imprimé préalablement au montage du cadre de lecture, ou l'ensemble support / cadre de lecture peut être monté en une opération, les alvéoles 22 étant de taille suffisante pour qu'un contrôle visuel des soudures des plages 18 sur le circuit imprimé soit possible.

En figures 5 et 6 est décrit une exemple de réalisation alternatif pour lequel le composant 1 est retenu sous le support isolant. Les éléments de contact 7 sont alors soit la terminaison d'un contact ressort en crosse assurant la rétention du composant et réalisant la connexion par sa face externe 13 au circuit imprimé comme vu en figure 6, soit prolongés par une patte de connexion 11 comme vu en figure 5. L'insertion et le maintien en position du composant 1 sont permis par des butées 14, par exemple munies d'un plan incliné pour permettre l'insertion du composant et d'une butée franche dans le sens extraction du composant.

Dans l'exemple des figures 5 et 6, les signaux sont accessibles au niveau du circuit imprimé par les crosses 13. Dans l'exemple décrit en figure 4, le composant peut ne comporter aucune plage de contact sur sa face inférieure. Des versions pour lesquelles l'une des trois branches de certains éléments de contacts peut être omise permet d'optimiser les liaisons et ne rendre accessibles au niveau du circuit imprimé que les signaux utiles tout en restant dans le cadre de l'invention.

Les soudures des différentes pattes ou plages de connexion sur le circuit imprimé pourront être réalisées selon les techniques habituelles de report à plat de composants électroniques.

## Revendications

1. Connecteur actif pour carte à puce constitué d'un composant (1) de contrôle d'opérations de lecture écriture de la carte à puce (20) et d'un cadre de lecture pour carte à puce comportant un support (2) en matériau isolant recevant des terminaisons de contact d'un premier type (3) faisant saillie d'un plan supérieur (4) du support en matériau isolant pour être en contact électrique avec des plages de contact (5) de la carte à puce, le dit support isolant comportant une face inférieure (6) s'inscrivant dans un plan inférieur, duquel font saillie, d'une part, des terminaisons de contact d'un deuxième type (7) pour être en contact électrique avec des plages de contact (8) du composant de contrôle d'opérations de lecture écriture de la carte à puce et, d'autre part, des jambes de liaison. (9, 11) sur un circuit imprimé dont la hauteur (h) définit un espace entre le support isolant et le circuit imprimé (15) tel que le composant de contrôle soit logé entre le plan inférieur du support isolant et le circuit imprimé.

2. Connecteur actif pour carte à puce selon la revendication 1 **caractérisé en ce que** une ou plusieurs des terminaisons de contact du premier type (3) sont prolongées par des branches (10) les reliant à des terminaisons de contact du deuxième type (7) correspondantes pour réaliser une liaison directe entre des plages de contact (5) de la carte à puce et des plages de contact du composant de contrôle.

3. Connecteur actif pour carte à puce selon l'une des revendications 1 ou 2 **caractérisé en ce que** certaines des jambes de liaisons sont constituées par des branches (10') terminées par des pattes (11) de connexion électrique d'une ou plusieurs des terminaisons de contact du premier type avec des pistes du circuit imprimé (15).

4. Connecteur actif pour carte à puce selon la revendication 3 **caractérisé en ce que** une ou plusieurs pattes de connexion possèdent une branche latérale (12) de liaison avec des terminaisons de contact du deuxième type.

5. Connecteur actif pour carte à puce selon la revendication 4 **caractérisé en ce que** la hauteur des jambes de liaison est telle que les branches latérales (12) soient mises en pression sur les plages de contact (8) respectives du composant de contrôle assurant ainsi la liaison électrique et le maintien mécanique du composant de contrôle entre le connecteur et le circuit imprimé.

6. Connecteur actif pour carte à puce selon l'une quelconque des revendications 1 à 3 **caractérisé en ce que** une ou plusieurs des terminaisons de contact du deuxième type comportent une portion ressort (13) d'accrochage et de maintien du composant de contrôle contre la face inférieure (6) du support isolant, la portion ressort assurant la mise en pression des deuxièmes terminaisons de contact avec les plages de contact du composant de contrôle.

7. Connecteur actif pour carte à puce selon la revendication 6 **caractérisé en ce que** les terminaisons de contact du premier type et les terminaisons de contact du deuxième type sont constituées par les parties terminales, respectivement supérieure et inférieure, de forme générale courbe, de lames de contact électrique débouchant respectivement en partie supérieure et en partie inférieure du support isolant, la face externe de la partie terminale supérieure étant en contact élastique avec une plage correspondante de la carte à puce, la face interne de la partie terminale inférieure étant en contact élastique avec une plage correspondante du composant de contrôle et la face externe de la partie terminale inférieure étant en contact avec une piste correspondante du circuit imprimé.

8. Connecteur actif pour carte à puce selon l'une quelconque des revendications précédentes **caractérisé en ce que** le support isolant comporte des butées d'insertion (14) du composant de contrôle sous le support isolant.

## Claims

1. Active connector for a smart card consisting of a component (1) for controlling read/write operations for the smart card (20) and a reading frame for a smart card comprising a support (2) made of an insulator accommodating contact terminations of a first type (3) projecting from an upper plane (4) of the support made of an insulator in order to be in electrical contact with contact pads (5) on the smart card, the said insulating support comprising a lower face (6) coming within a lower plane, from which project, on the one hand, contact terminations of a second type (7) in order to be in electrical contact with the contact pads (8) on the component controlling read/write operations of the smart card and, on the other hand, legs (9, 11) for connection to a printed circuit whose height (h) defines a space between the insulating support and the printed circuit (15) such that the control component is housed between the lower plane of the insulating support and the printed circuit.

2. Active connector for a smart card according to Claim 1, **characterized in that** one or more of the contact terminations of the first type (3) are extended by arms (10) connecting them to corresponding contact terminations of the second type (7) in order to make a direct connection between contact pads (5) on the smart card and contact pads on the control component.

3. Active connector for a smart card according to either of Claims 1 and 27 **characterized in that** some of the connection legs consist of arms (10') terminated by lugs (11) for electrically connecting one or more of the contact terminations of the first type with tracks of the printed circuit (15).

4. Active connector for a smart card according to Claim 3, **characterized in that** one or more connection lugs have a side arm (12) for connection with contact terminations of the second type.

5. Active connector for a smart card according to Claim 4, **characterized in that** the height of the connection legs is such that the side arms (12) are pressed against the respective contact pads (8) on the control component thus providing the electrical connection and the mechanical holding of the control component between the connector and the printed circuit.

6. Active connector for a smart card according to any one of Claims 1 to 3, **characterized in that** one or more of the contact terminations of the second type comprise a spring portion (13) for fastening and holding the control component against the lower face (6) of the insulating support, the spring portion ensuring that the second contact terminations are pressed against the contact pads on the control component.

7. Active connector for a smart card according to Claim 6, **characterized in that** the contact terminations of the first type and the contact terminations of the second type consist of upper and lower terminal parts respectively, of overall curved shape, having electrical contact strips emerging respectively from the upper part and from the lower part of the insulating support, the outer face of the upper terminal part being in elastic contact with a corresponding pad on the smart cards the inner face of the lower terminal part being in elastic contact with a corresponding pad on the control component and the outer face of the lower terminal part being in contact with a corresponding track on the printed circuit.

8. Active connector for a smart card according to any one of the preceding claims, **characterized in that** the insulating support comprises stops (14) for inserting the control component under the insulating support.

## Patentansprüche

1. Aktiver Chipkarten-Verbinder, der aus einem Bauteil (1) zur Steuerung von Lese-/Schreibvorgängen der Chipkarte (20) und einem Leserahmen für eine Chipkarte besteht, der einen Träger (2) aus isolierendem Material aufweist, der Kontaktanschlüsse eines ersten Typs (3) aufnimmt, die aus einer oberen Ebene (4) des Trägers aus isolierendem Material vorstehen, um mit Kontaktbereichen (5) der Chipkarte in elektrischem Kontakt zu stehen, wobei der isolierende Träger eine Unterseite (6) aufweist, die in einer unteren Ebene liegt, aus der einerseits Kontaktanschlüsse eines zweiten Typs (7), um mit Kontaktbereichen (8) des Bauteils zum Steuern von Lese-/Schreibvorgängen der Chipkarte in elektrischem Kontakt zu stehen, und andererseits Verbindungsbeine (9, 11) auf eine gedruckte Schaltung vorstehen, deren Höhe (h) einen Raum zwischen dem isolierenden Träger und der gedruckten Schaltung (15) definiert, derart, daß das Steuerbauteil zwischen der unteren Ebene des isolierenden Trägers und der gedruckten Schaltung angeordnet ist.

2. Aktiver Chipkarten-Verbinder nach Anspruch 1, **dadurch gekennzeichnet, daß** einer oder mehrere der Kontaktanschlüsse des ersten Typs (3) von Zweigen (10) verlängert werden, die sie mit entsprechenden Kontaktanschlüssen des zweiten Typs (7) verbinden, um eine direkte Verbindung zwischen Kontaktbereichen (5) der Chipkarte und Kontaktbereichen des Steuerbauteils herzustellen.

3. Aktiver Chipkarten-Verbinder nach einem der Ansprüche 1 oder 2, **dadurch gekennzeichnet, daß** einige der Verbindungsbeine aus Zweigen (10') bestehen, die in Laschen (11) zur elektrischen Verbindung eines oder mehrerer der Kontaktanschlüsse des ersten Typs mit Leiterbahnen der gedruckten Schaltung (15) enden.

4. Aktiver Chipkarten-Verbinder nach Anspruch 3, **dadurch gekennzeichnet, daß** eine oder mehrere Verbindungslaschen einen Seitenzweig (12) zur Verbindung mit Kontaktanschlüssen des zweiten Typs besitzen.

5. Aktiver Chipkarten-Verbinder nach Anspruch 4, **dadurch gekennzeichnet, daß** die Höhe der Verbindungsbeine so ist, daß die Seitenzweige (12) auf die jeweiligen Kontaktbereiche (8) des Steuerbauteils gedrückt werden, wodurch die elektrische Verbindung und der mechanische Halt des Steuerbauteils zwischen dem Verbinder und der gedruckten Schaltung gewährleistet werden.

6. Aktiver Chipkarten-Verbinder nach einem der Ansprüche 1 bis 3, **dadurch gekennzeichnet, daß** einer oder mehrere der Kontaktanschlüsse des zweiten Typs einen Federabschnitt (13) zum Befestigen und Halten des Steuerbauteils gegen die Unterseite (6) des isolierenden Trägers aufweisen, wobei der Federabschnitt das Zusammendrücken der zweiten Kontaktanschlüsse mit den Kontaktbereichen des Steuerbauteils gewährleistet.

7. Aktiver Chipkarten-Verbinder nach Anspruch 6, **dadurch gekennzeichnet, daß** die Kontaktanschlüsse des ersten Typs und die Kontaktanschlüsse des zweiten Typs aus den oberen bzw. unteren Endbereichen allgemein gekrümmter Form von elektrischen Kontaktlamellen bestehen, die je im oberen bzw. unteren Bereich des isolierenden Trägers münden, wobei die Außenfläche des oberen Endbereichs in elastischem Kontakt mit einem entsprechenden Bereich der Chipkarte steht, während die Innenfläche des unteren Endbereichs in elastischem Kontakt mit einem entsprechenden Bereich des Steuerbauteils steht, und die Außenfläche des unteren Anschlußbereichs mit einer entsprechenden Leiterbahn der gedruckten Schaltung in Kontakt steht.

8. Aktiver Chipkarten-Verbinder nach einem der vorhergehenden Ansprüche, **dadurch gekennzeichnet, daß** der isolierende Träger Einführ-Anschläge (14) für das Steuerbauteil unter dem isolierenden Träger besitzt.
